# EUROPÄISCHE PATENTSCHRIFT

(11) **EP 2 039 408 B1**
(45) Veröffentlichungstag und Bekanntmachung des Hinweises auf die Patenterteilung: **27.04.2011**
(21) Anmeldenummer: 07018659.8
(22) Anmeldetag: 22.09.2007
(51) Int. Cl.: B01D 3/12

(54) **Kurzwegverdampfer**
Shortcut vaporiser
Evaporateur à court trajet

(43) Veröffentlichungstag der Anmeldung: 25.03.2009
(73) Patentinhaber: Buss-SMS-Canzler GmbH, 35510 Butzbach (DE)
(72) Erfinder: Mix, Gunter, 52388 Nörvenich (DE)
(74) Vertreter: Schaad, Balass, Menzl & Partner AG

(56) Entgegenhaltungen:
- DE-A1- 10 024 418
- DE-A1- 19 723 874
- GB-A- 765 743
- US-A- 5 282 929

## Beschreibung

Die vorliegende Erfindung betrifft einen Kurzwegverdampfer gemäss dem Oberbegriff des Anspruchs 1 sowie ein Verfahren zur Auftrennung eines Stoffgemischs in einem Kurzwegverdampfer gemäss Anspruch 11.

Kurzwegverdampfer werden zum Verdampfen, Konzentrieren, Destillieren oder Entgasen temperaturempfindlicher, hochsiedender Stoffgemische eingesetzt.

Das Prinzip der Kurzwegverdampfung beruht darauf, dass ein dem Verdampfer zugeführtes Stoffgemisch an einer Verdampfungsfläche erhitzt wird und die dabei verdampfenden Bestandteile des Stoffgemischs an einer der Verdampfungsfläche gegenüberliegenden Kondensatorfläche kondensieren. Dabei wird der Abstand zwischen der Verdampfungsfläche und der Kondensatorfläche sehr gering gewählt, um Druckverluste über den Weg von der Verdampfungsfläche zur Kondensatorfläche zu minimieren.

US 5,282,929 offenbart einen Kurzwegverdampfer, welcher zur Gewinnung von Polyetherglykol enger Molekulargewichtsverteilung verwendet wird.

GB 765,743 beschreibt eine Molekulardestillationsapparatur, bei dem eine drehbare Verdampferoberfläche von einem konischen oder glockenförmigen Verdampfer gebildet wird und am oberen Ende einer Vakuumkammer befestigt und angetrieben wird.

Kurzwegverdampfer können mit Drücken von 0,1 bis 0,001 mbar (abs) und entsprechend tiefen Temperaturen betrieben werden. Dies erlaubt es, extrem temperaturempfindliche Stoffgemische, wie etwa Vitamine und Aromastoffe enthaltende Stoffgemische, ohne thermische Schädigung der einzelnen Stoffe zu destillieren.

Bekannte Kurzwegverdampfer weisen den Nachteil auf, dass eine befriedigende Auftrennung des Stoffgemischs in seine einzelnen Bestandteile oft schwierig zu erreichen ist. So gelangt aufgrund des geringen Abstands zwischen der Verdampfungsfläche und der Kondensatorfläche bei der bei der Einführung des Stoffgemisches in den Kurzwegverdampfer auftretenden Entspannungsverdampfung in der Regel ein Teil der höhersiedenden (oder schwersiedenden) Bestandteile durch "Mitriss" in das Kondensat der tiefersiedenden (oder leichtsiedenden) Bestandteile. Dies ist insbesondere dann der Fall, wenn das zum Kurzwegverdampfer zugeführte Stoffgemisch überhitzt ist, was bei Kurzwegverdampfungsprozessen die Regel ist, da dabei oft mehrere Verdampferstufen mit sich stark voneinander unterscheidenden Drücken nacheinander angeordnet werden.

Die Auftrennung des Stoffgemisches kann etwa dadurch verbessert werden, indem es vor der Zufuhr zum Kurzwegverdampfer gekühlt wird. Dies ist energetisch aber nicht sinnvoll, da für die Verdampfung im Kurzwegverdampfer dem Stoffgemisch wieder Wärme zugeführt werden muss.

Aufgabe der vorliegenden Erfindung ist es somit, einen Kurzwegverdampfer zur Verfügung zu stellen, mit dem in energetisch vorteilhafter Weise eine gute Auftrennung des Stoffgemisches erreicht wird.

Die Aufgabe der Erfindung wird mit einem im Anspruch 1 definierten Kurzwegverdampfer gelöst. Bevorzugte Ausführungsformen sind in den abhängigen Ansprüchen definiert.

Erfindungsgemäss weist der Kurzwegverdampfer der vorliegenden Erfindung eine zwischen der Materialzuführung und dem Kondensator angeordnete Trennwand auf, die den Innenraum in einen Vorverdampfungsraum, in den die Materialzuführung mündet, und einen den Kondensator umfassenden Verdampfungs-/Kondensatorraum trennt.

Bei der Zuführung des Stoffgemischs in den Vorverdampfungsraum findet aufgrund der Druckabnahme eine Entspannungsverdampfung statt, wobei mindestens ein Teil der tiefersiedenden Bestandteile des Stoffgemischs in die Gasphase übergeht. Die entstehenden Gase werden auch als "Brüden" bezeichnet.

Da der Vorverdampfungsraum vom Verdampfungs-/Kondensatorraum getrennt ist, gelangen die in ersterem entstehenden Brüden nicht direkt in Kontakt mit dem Kondensator und dem sich auf diesem bildenden Kondensat. Durch geeignete Dimensionierung des Vorverdampfungsraums kann die Brüdengeschwindigkeit und somit der Anteil an mitgerissenen höhersiedenden Bestandteilen in optimaler Weise vermindert werden.

Somit findet bereits im Vorverdampfungsraum eine Trennung in hauptsächlich in der flüssigen Phase vorliegende höhersiedende Bestandteile und in hauptsächlich in der gasförmigen Phase vorliegende tiefersiedende Bestandteile statt.

Erfindungsgemäss werden die flüssigen und die gasförmigen Anteile vom Vorverdampfungsraum separat an die Verdampfungsfläche bzw. an den Kondensator im Verdampfungs-/Kondensatorraum geleitet. Dazu ist der Trennwand ein erster Durchlass zur Leitung des im Vorverdampfungsraum enthaltenen flüssigen Anteils an die die Verdampfungsfläche bildende innere Oberfläche des Gehäusemantels im Verdampfungs-/Kondensatorraum zugeordnet. Zudem weist die Trennwand mindestens einen zweiten Durchlass zur Leitung des im Vorverdampfungsraum enthaltenen gasförmigen Anteils an den Kondensator auf.

Durch die erfindungsgemässe separate Zuführung der flüssigen und der gasförmigen Anteile zur Verdampfungsfläche bzw. zum Kondensator wird im Verdampfungs-/Kondensatorraum ein Mitriss von höhersiedenden Bestandteile durch tiefersiedende Bestandteile stark vermindert.

Dies resultiert insgesamt in einer sehr guten Auftrennung des dem Kurzwegverdampfer zugeführten Materials.

In der Regel ist das Gehäuse des erfindungsgemässen Kurzwegverdampfers kreiszylinderförmig und betriebsgemäss vertikal ausgerichtet. Ebenso sind die die Verdampfungsfläche bildende innere Oberfläche des Gehäusemantels und der im Innenraum des Gehäuses umfasste Kondensator vertikal ausgerichtet, sodass das Material auf der Verdampfungsfläche und das Kondensat auf der Kondensatorfläche aufgrund der Gravitation nach unten fliessen.

Obschon, wie oben erwähnt, Teile des Stoffgemischs im Vorverdampfungsraum verdampfen und teilweise kondensieren können, werden die Begriffe "Verdampfungsfläche" und "Kondensatorfläche" vorliegend für die im Verdampfungs-/Kondensatorraum vorliegende Verdampfungsfläche bzw. Kondensatorfläche verwendet. In der Regel wird die Verdampfungsfläche mittels eines Heizmittels beheizt und die Kondensatorfläche mittels eines Kühlmittels gekühlt.

Gemäss einer bevorzugten Ausführungsform der Erfindung bildet die Trennwand den Boden des Vorverdampfungsraums. Sie ist somit in der Regel horizontal ausgerichtet. Der Vorverdampfungsraum ist dabei oberhalb des Verdampfungs-/Kondensatorraums angeordnet.

Gemäss einer weiteren bevorzugten Ausführungsform ist der Durchmesser der Trennwand geringer als der innere Durchmesser des Gehäusemantels, sodass zwischen der Trennwand und der inneren Oberfläche des Gehäusemantels ein Spalt ausgebildet ist, der den ersten Durchlass bildet. Durch diesen Spalt fliesst der im Vorverdampfungsraum enthaltene flüssige Anteil aufgrund der Gravitation entlang der inneren Oberfläche des Gehäusemantels in den Verdampfungs-/Kondensatorraum und somit auf die Verdampfungsfläche.

Gemäss einer weiteren bevorzugten Ausführungsform ist der zweite Durchlass in der Verlängerung des Kondensators angeordnet und weist einen Rohrstutzen auf, der von der Trennwand in den Vorverdampfungsraum hinein vorsteht.

Vorzugsweise liegt das freie Ende des Rohrstutzens im Vorverdampfungsraum höher als die maximale Füllhöhe des im Vorverdampfungsraum enthaltenen flüssigen Anteils, um zu vermeiden, dass dieser in den Rohrstutzen gelangen kann. Vorzugsweise weist der Rohrstutzen zudem eine Abdeckhaube auf, wobei zwischen Rohrstutzen und Abdeckhaube ein Durchtrittsspalt ausgebildet ist, der die Verbindung zwischen Vorverdampfungsraum und Verdampfungs-/Kondensatorraum sicherstellt. Die Abdeckhaube verhindert, dass flüssige Stoffgemischbestandteile, etwa von der oberen Gehäusewand tropfende Stoffgemischbestandteile, in den zweiten Durchlass gelangen können.

Gemäss einer weiteren bevorzugten Ausführungsform ist der Gehäusemantel ausschliesslich im Bereich des Verdampfungs-/Kondensatorraums beheizt. Somit ist in dieser Ausführungsform der Gehäusemantel im Bereich des Vorverdampfungsraums nicht unmittelbar beheizt.

Die Verweilzeit des zugeführten Stoffgemischs im Vorverdampfungsraum hängt von der spezifischen Prozessführung der Kurzverdampfung ab. Bevorzugt mündet die Materialzuführung direkt oberhalb der den Boden bildenden Trennwand, d.h. in einem geringen Abstand zur Trennwand, in den Vorverdampfungsraum.

Der Kondensator ist in der Regel aus kreisförmig um die Achse des Gehäuses angeordneten Kondensatorrohren gebildet. Alternativ dazu kann der Kondensator aus Kondensatorblechen, d.h. aus konzentrisch angeordneten, hohlzylinderförmigen Lamellenblechen mit Strömungshohlräumen, ausgebildet sein.

Gemäss einer bevorzugten Ausführungsform ist die Trennwand um die Längsachse des Gehäuses drehbar und weist an ihrem radialen äusseren Randbereich eine in den Verdampfungs-/Kondensatorraum vorstehende Aufhängung mit Verteilungsmitteln zur Verteilung von Material auf der Verdampfungsfläche auf. Während des Betriebs kann die Trennwand etwa über eine mit einer Antriebseinheit verbundenen Rotorwelle in Rotation versetzt werden. Dadurch wird einerseits erreicht, dass die flüssigen Anteile im Vorverdampfungsraum aufgrund der wirkenden Zentrifugalkraft an den den ersten Durchlass bildenden Spalt und somit an die innere Oberfläche des Gehäusemantels geführt werden. Andererseits wird erreicht, dass die flüssigen und die gasförmigen Anteile des zugeführten Materials über den gesamten Umfang der Verdampfungsfläche bzw. des Kondensators verteilt werden. In der Regel liegen die Verteilungsmittel in Form von Wischblättern vor, die bei rotierender Aufhängung das Material auf der Verdampfungsfläche gleichmässig verteilen.

Die im Verdampfungs-/Kondensatorraum entstehenden Brüden sind je nach Stoffgemisch und je nach Höhe der Verdampfungsfläche, also je nach Verweilzeit des Stoffgemischs auf der Verdampfungsfläche, unterschiedlich zusammengesetzt. Die entsprechenden Kondensate aus den Brüden fallen somit weitgehend auf konstanter Höhe des Kondensators an.

Um einzelne Stoffe des Stoffgemisches separat in hoher Reinheit zu erhalten, weist, in einer bevorzugten Ausführungsform, der Kondensator übereinander angeordnete Kondensationszonen auf, an deren unterem Ende jeweils eine Sammelvorrichtung zur Sammlung des Kondensats der jeweiligen Kondensationszone angeordnet ist. Von jeder der Sammelvorrichtungen führt ein Kanal zur Abführung des in der betroffenen Kondensationszone gesammelten Kondensats weg. Somit kann für jede einzelne Kondensationszone das darin gesammelte Kondensat separat erhalten werden.

Dies erlaubt es, selbst in einem komplexen Stoffgemisch enthaltene Bestandteile in hoher Reinheit zu erhalten. Dadurch, dass die Sammelvorrichtungen in der Höhe auf dem Kondensator verstellt werden können, kann der erfindungsgemässe Kurzwegverdampfer auf verschiedene Stoffgemische eingestellt werden.

Vorzugsweise ist die Sammelvorrichtung in Form einer Rinne ausgebildet. Dies erlaubt eine sehr stabile Bauweise des den Kondensator und die Sammelvorrichtungen umfassenden Kondensationseinsatzes. Durch die rinnenförmige Ausgestaltung der Sammelvorrichtung wird vermieden, dass das in der jeweiligen Kondensationszone gesammelte Kondensat in das Kondensat einer weiteren Kondensationszone gelangt. Der von der Sammelvorrichtung wegführende Kanal ist in der Regel rohrförmig ausgebildet. In einer weiteren bevorzugten Ausführungsform verläuft das Rohr schräg nach unten, was ein kontrolliertes Fliessen des gesammelten Kondensats durch den von der Sammelvorrichtung wegführenden Kanal gewährleistet. Alternativ dazu ist auch denkbar, dass das Rohr im Wesentlichen vertikal nach unten verläuft.

Vorzugsweise münden mindestens zwei der Kanäle in eine Kammer, von der ein Sammelkanal zur Abführung des darin gesammelten Kondensats aus dem Kurzwegverdampfer wegführt.

Im Allgemeinen weist der Kurzwegverdampfer der vorliegenden Erfindung zudem separate Ausgänge zum Ausführen des nicht kondensierten gasförmigen Anteils bzw. des Verdampfungsrückstands aus dem Kurzwegverdampfer auf.

Weiter betrifft die Erfindung ein Verfahren zur Auftrennung eines Stoffgemischs im beschriebenen Kurzwegverdampfer gemäss Anspruch 11. Beispielhaft dafür sei etwa die Auftrennung von Monoglyceridgemischen erwähnt, die vielfach noch tiefersiedende Bestandteile wie Glycerin und tiefersiedende Fettsäuren umfassen. Diese tiefersiedenden Bestandteile verdampfen bereits im Vorverdampfungsraum, werden somit bereits in diesem von den höhersiedenden Bestandteilen getrennt und gelangen in der Folge nicht mit dem die höhersiedenden Bestandteile enthaltenden flüssigen Anteil auf die Verdampfungsfläche des Verdampfungs-/Kondensatorraums.

Die Erfindung wird weiter anhand der angefügten Figuren erläutert. Es zeigen rein schematisch:
- Fig. 1: einen axialen Längsschnitt eines Kurzwegverdampfers des Standes der Technik mit einer daran angeordneten Rotorantriebseinheit;
- Fig. 2: einen axialen Längsschnitt eines erfindungsgemässen Kurzwegverdampfers, wobei der Gehäusemantel und der Kondensator sowie die dem Kondensator zugeordneten Elemente nur teilweise dargestellt sind;
- Fig. 3: vergrössert eine Hälfte eines oberen Segments des in Fig. 2 gezeigten Kurzwegverdampfers;
- Fig. 4: in Ansicht einen Kondensationseinsatz des in den Fig. 2 und 3 gezeigten Kurzwegverdampfers, wobei der Kondensationseinsatz an der unteren Gehäusewand des Kurzwegverdampfers angeordnet ist;
- Fig. 5: einen axialen Längsschnitt eines weiteren erfindungsgemässen Kurzwegverdampfers umfassend ein Kondensatorblech; und
- Fig. 6: eine Ansicht des äusseren Lamellenblechs und der diesem zugeordneten Komponenten des in Fig. 5 gezeigten Kurzwegverdampfers.

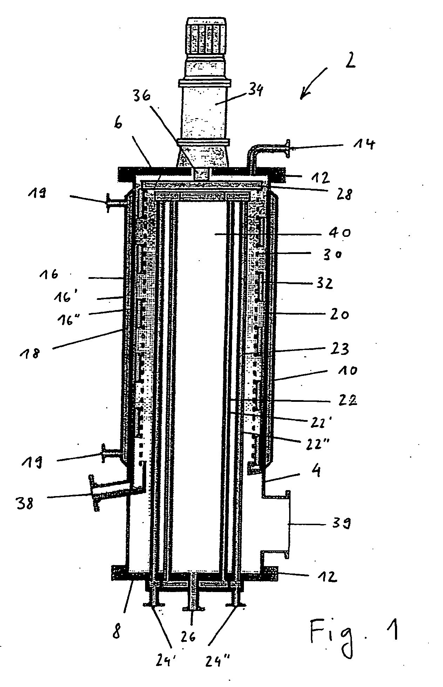

Der in Fig. 1 gezeigte Kurzwegverdampfer 2 des Standes der Technik umfasst ein Gehäuse 4 mit einer oberen Gehäusewand 6, einer unteren Gehäusewand 8 und einem kreiszylindrischen Gehäusemantel 10. Die obere und die untere Gehäusewand 6 bzw. 8 sind mit dem oberen bzw. dem unteren Ende des Gehäusemantels 10 über Flansche 12 verbunden. Durch die obere Gehäusewand 8 führt eine Materialzuführung 14 in Form eines Rohrstutzens in den vom Gehäuse 4 begrenzten Innenraum 40 des Kurzwegverdampfers.

Der Gehäusemantel 10 ist in den oberen zwei Dritteln des Gehäuses 4 in Form einer Doppelwand 16 ausgebildet. Zu dem durch die beiden Wände 16', 16" der Doppelwand 16 umschlossenen Zwischenraum 18 führt am unteren und am oberen Ende der Doppelwand 16 je eine Leitung 19 durch die äussere Wand 16'. Mittels dieser Leitung 19 kann ein Heizmittel in den Zwischenraum 18 eingeführt werden. Die radial innere Oberfläche des Gehäusemantels 10 hat im Bereich der so beheizbaren Doppelwand 16 die Funktion einer Verdampfungsfläche 20 für das durch die Materialzuführung 14 in den Kurzwegverdampfer 2 eingebrachte Stoffgemisch.

Im Inneren des Gehäuses sind konzentrisch zwei Reihen von miteinander strömungsverbundenen Kondensatorrohren 22', 22" angeordnet, die in ihrer Gesamtheit den Kondensator 22 bilden. Die Kondensatorrohre sind mit Leitungen 24', 24" zum Zuführen und/oder Abführen eines Kühlmittels verbunden.

Die auf der Verdampfungsfläche 20 verdampfenden Bestandteile des Stoffgemischs kondensieren an der durch die Oberfläche der Kondensatorrohre 22', 22" gebildeten Kondensatorfläche 23, worauf das dabei entstehende Kondensat aufgrund der Gravitation entlang des Kondensators 22 nach unten fliesst. Das sich am Boden des Kurzwegverdampfers 2 ansammelnde Kondensat wird über eine durch die untere Gehäusewand 8 führende Leitung 26 ausgeführt.

Der Kurzwegverdampfer 2 weist oberhalb des Kondensators 22 eine im Wesentlichen scheibenförmige, um die Längsachse des Gehäuses 4 drehbare und während des Betriebs rotierende Rotorplatte 28 auf, an deren peripherem Randbereich eine Aufhängung 30 angeordnet ist mit daran umlaufend angeordneten Verteilungsmitteln 32 zur Verteilung des zugeführten Materials auf der Verdampfungsfläche 20. Diese Verteilungsmittel 32 können etwa in Form von Wischblättern vorliegen. Sie sind in Umfangsrichtung in regelmässigen Abständen und in axialer Richtung derart versetzt zueinander angeordnet, dass sie auf einer (oder mehreren) um die Längsachse herum verlaufenden Spirale(n) liegen. Die Rotorplatte 28 wird durch eine Rotorantriebseinheit 34 über eine die obere Gehäusewand 6 durchgreifende und mit der Rotorplatte 28 verbundene Rotorwelle 36 angetrieben. Somit rotiert während des Betriebs auch die Aufhängung 30 mit den daran angeordneten Verteilungsmitteln 32, was gewährleistet, dass das zugeführte Material auf der Verdampfungsfläche 20 verteilt wird. Im unteren Drittel des Gehäusemantels 10, d.h. unterhalb der Doppelwand 16 und unterhalb der Aufhängung 30 ist ein Ausgang 38 zum Ausführen des Verdampfungsrückstands angeordnet. Dieser verläuft schräg nach unten, um das Ausführen des Verdampfungsrückstandes zu begünstigen.

Zudem ist auf der dem Ausgang 38 für den Verdampfungsrückstand gegenüberliegenden Seite des Gehäuses 4 ein Ausgang 39 zum Ausführen der nicht kondensierten gasförmigen Bestandteile des Stoffgemischs angeordnet.

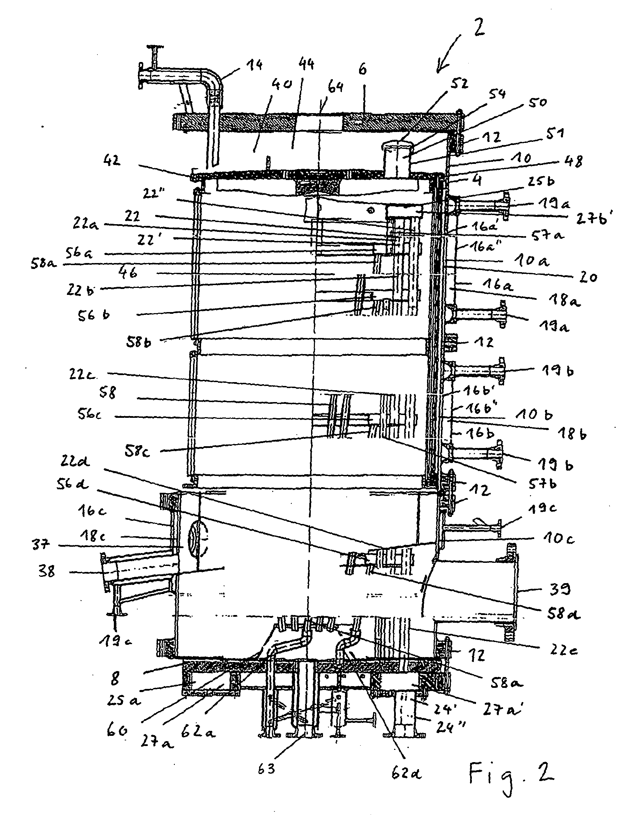

Figur 2 zeigt einen erfindungsgemässen Kurzwegverdampfer 2 mit einer oberen Gehäusewand 6, einer unteren Gehäusewand 8 und einem kreiszylinderförmigen Gehäusemantel 10, der nur teilweise gezeigt ist. In der gezeigten Ausführungsform umfasst der Gehäusemantel 10 drei separate Gehäusemantelsegmente 10a, 10b, 10c.

Am oberen und am unteren Ende der Gehäusemantelsegmente 10a, 10b, 10c ist jeweils ein Flansch 12 zur Befestigung der Gehäusemantelsegmente miteinander bzw. zur Befestigung der oberen Gehäusewand 6 bzw. der unteren Gehäusewand 8 angeordnet.

Die oberen Gehäusemantelsegmente 10a, 10b weisen je einen Bereich auf, der in Form einer Doppelwand 16a, 16b ausgebildet ist. Zu dem durch die beiden Wände 16a', 16a" bzw. 16b', 16b' der Doppelwand 16a bzw. 16b umschlossenen Zwischenraum 18a, 18b führen Leitungen 19a, 19b, mittels welcher ein Heizmittel in den Zwischenraum 18a, 18b ein-und/oder ausgeführt werden kann.

An der inneren Oberfläche des untersten Gehäusemantelsegments 10c ist ein ringförmiger Sammelkanal 37 zur Sammlung des Verdampfungsrückstands angeordnet. Der Sammelkanal 37 ist gegen oben offen und weist einen in einer schiefen Ebene liegenden Boden auf, von dessen untersten Punkt ein schräg nach unten verlaufender Ausgang 38 zum Ausführen des Verdampfungsrückstands wegführt. Auf der dem Ausgang 38 gegenüberliegenden Seite ist ein Ausgang 39 zum Ausführen der nicht kondensierten gasförmigen Bestandteile des Stoffgemisches angeordnet. In seinem oberen Bereich ist das unterste Gehäusemantelsegment 10c in Form einer Doppelwand 16c ausgebildet, der Leitungen 19c zum Ein- und/oder Ausführen eines Heizmittels in den von der Doppelwand 16c umschlossenen Zwischenraum 18c zugeordnet sind. In der gezeigten Ausführungsform ist auch der Ausgang 38 doppelwandig ausgebildet.

Das Vorliegen getrennter, von der jeweiligen Doppelwand umgrenzter Zwischenräume erlaubt es, die Gehäusemantelsegmente separat zu beheizen und somit Heizzonen mit unterschiedlicher Temperatur zu erhalten.

Durch die obere Gehäusewand 6 führt eine rohrartige Materialzuführung 14 in den vom Gehäuse 4 begrenzten Innenraum 40 des Kurzwegverdampfers 2. Im Innenraum 40 weist der Kurzwegverdampfer 2 einen Kondensator 22 in Form von in zwei zur Längsachse des Gehäuses 4 konzentrischen Reihen angeordneten Kondensatorrohren 22' 22" auf. Der Kondensator 22 ist von der unteren Gehäusewand 8 getragen.

Die Kondensatorrohre 22', 22" münden an ihrem oberen und an ihrem unterem Ende in je einen ringförmigen Kühlmittelbehälter 25a, 25b. Die Kühlmittelbehälter 25a, 25b sind in einzelne, in Umfangsrichtung hintereinander angeordnete Kammern 27a bzw. 27b unterteilt. Dabei führen von einer ersten Kammer 27a' des unteren Kühlmittelbehälters 25a fünf Kondensatorrohre 22', 22" zu einer ersten Kammer 27b' des oberen Kühlmittelbehälters 25b. Von dieser ersten Kammer 27b' des oberen Kühlmittelbehälters 25b führen weitere drei Kondensatorrohre 22', 22" zu einer der ersten Kammer 27a' des unteren Kühlmittelbehälters 25a benachbarten zweiten Kammer 27a" (nicht gezeigt). Von dieser zweiten Kammer 27a'' des unteren Kühlmittelbehälters 25b führen wiederum fünf Kondensatorrohre 22', 22" in eine zweite, der ersten Kammer 27b' des oberen Kühlmittelbehälters 25b benachbarte zweite Kammer 27b" u.s.w. Die erste Kammer 27a' des unteren Kühlmittelbehälters 25a ist mit einer Leitung 24' zur Zuführung des Kühlmittels verbunden, während von der in Strömungsrichtung letzten Kammer, die der ersten Kammer 27a' benachbart ist, eine Leitung 24" zur Abführung des Kühlmittels wegführt.

Dadurch, dass die Kondensatorrohre 22', 22", durch die das Kühlmittel nach unten strömt, bei gleichem Strömungsquerschnitt in geringeren Anzahl vorliegen, als die Kondensatorrohre 22', 22", durch die das Kühlmittel nach oben strömt, ist die Strömungsgeschwindigkeit beim Herunterfliessen erhöht. Somit wird allfällige beim Aufwärtsströmen des Kühlmittels mitgerissene Luft beim Herunterfliessen wieder mitgenommen. Schliesslich wird das Kühlmittel zusammen mit allfällig mitgerissener Luft über die Leitung 24" aus der in Strömungsrichtung letzten Kammer 27a des unteren Kühlmittelbehälters 25a weggeführt.

Zwischen dem Kondensator 22 und der Materialzuführung 14 ist eine scheibenförmige Trennwand 42 angebracht, die den Innenraum 40 des Kurzwegverdampfers 2 in einen obenliegenden Vorverdampfungsraum 44 und einen untenliegenden Verdampfungs-/Kondensatorraum 46 trennt. Die Materialzuführung 14 endet in kurzem Abstand von der Trennwand 42, sodass das eingeführte Material auf die Trennwand 42 geführt wird.

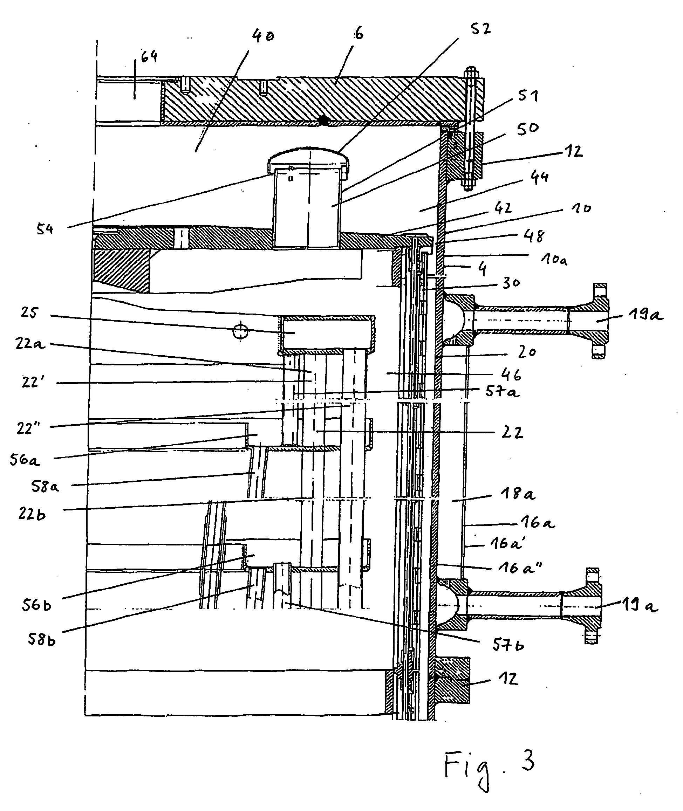

Wie insbesondere auch aus Fig. 3 ersichtlich, ist der Durchmesser der Trennwand 42 etwas geringer als der innere Durchmesser des Gehäusemantels 10, so dass zwischen dem peripheren Rand der Trennwand 42 und der inneren Oberfläche des Gehäusemantels 10 ein einen der Trennwand 42 zugeordneten ersten Durchlass 48 bildender Spalt vorliegt. Die im Vorverdampfungsraum 44 enthaltenen flüssigen Anteile gelangen über den ersten Durchlass 48 in den Verdampfungs-/Kondensatorraum 46 an die Verdampfungsfläche 20.

Die Trennwand 42 weist mindestens einen zweiten Durchlass 50 auf, der in einem radialem Abstand von der Längsachse des Gehäuses 4 angeordnet ist, welcher im Wesentlichen dem radialen Abstand des Kondensators 22 von der Längsachse des Gehäuses entspricht. Somit ist der zweite Durchlass 50 der Trennwand 42 in der Verlängerung des Kondensators 22 angeordnet.

Der zweite Durchlass 50 umfasst einen in die Trennwand 42 eingesetzten Rohrstutzen 51, dessen oberes freies Ende im Vorverdampfungsraum 44 derart von der Trennwand 42 beabstandet ist, dass es über dem maximalen Füllgrad der Flüssigkeit im Vorverdampfungsraum 44 liegt. Der Rohrstutzen 51 weist an seinem freien Ende eine Abdeckhaube 52 auf. Zwischen Rohrstutzen 51 und Abdeckhaube 52 ist ein Durchtrittsspalt 54 ausgebildet, der die Verbindung zwischen dem Vorverdampfungsraum 44 und dem Verdampfungs-/Kondensatorraum 46 sicherstellt.

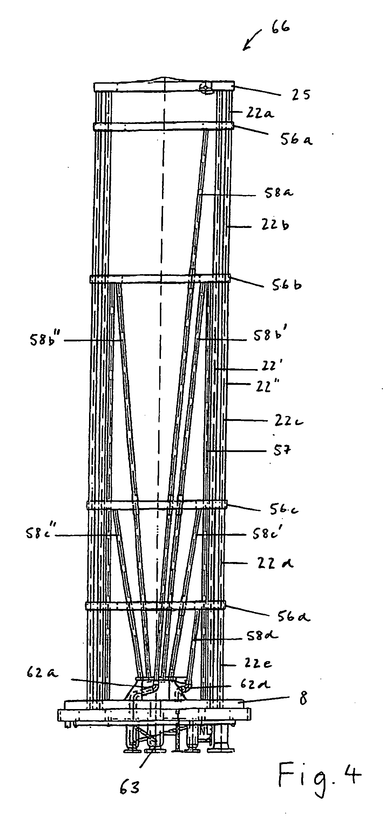

Wie aus Fig. 2 und insbesondere aus Fig. 4 weiter ersichtlich ist, weist der Kondensator 22 fünf übereinander angeordnete Kondensationszonen 22a, 22b, 22c, 22d, 22e auf. Am unterem Ende der oberen vier Kondensationszonen 22a, 22b, 22c, 22d ist jeweils eine Sammelvorrichtung 56a, 56b, 56c, 56d in Form einer ringförmigen Rinne angeordnet. Die Sammelvorrichtung der untersten Kondensationszone 22e wird von der unteren Gehäusewand 8 gebildet. Zwischen der obersten Sammelvorrichtung 56a und dem Kühlmittelbehälter 25 ist ein Stützelement 57a angeordnet. Die übrigen Sammelvorrichtungen 56b, 56c, 56d werden mittels eines weiteren mit der unteren Gehäusewand 8 verbundenen Stützelements 57b gestützt.

Von den rinnenförmigen Sammelvorrichtungen 56a, 56b, 56c, 56d führen rohrförmige, schräg nach unten verlaufende Kanäle 58a, 58b, 58c, 58d weg. Dabei durchstossen die Kanäle 58a, 58b, 58c die unterhalb der jeweiligen Sammelvorrichtung 56a, 56b bzw. 56c angeordnete(n) rinnenförmige(n) Sammelvorrichtung(en) 56b, 56c bzw. 56d, wobei zwischen dem durchstossenden Kanal und der jeweiligen Sammelvorrichtung ein dichter Abschluss ausgebildet ist. Der die Sammelvorrichtung durchstossende Bereich des jeweiligen Kanals 58a, 58b, 58c ist thermisch isoliert.

Zudem kann zwischen den Sammelvorrichtungen 56a, 56b, 56c, 56d und den Kondensatorrohren 22', 22" eine Dichtung vorgesehen sein. Diese ist aber nicht zwingend notwendig.

Wie insbesondere aus Fig. 3 ersichtlich ist, weist die obere Gehäusewand 6 eine Durchtrittsöffnung 64 auf. In der betriebsgemässen Anordnung führt durch die Durchtrittsöffnung 64 dichtend eine mit einer Antriebseinheit ausserhalb des Kurzwegverdampfers 2 verbundene, z.B. im Zusammenhang mit dem Stand der Technik in Fig. 1 gezeigte Rotorwelle 36, welche die Rotation auf die Trennwand 42 überträgt. Somit rotiert die Trennwand 42 mit der in diesem angeordneten zweiten Durchlass 50 während des Betriebs des Kurzwegverdampfers 2, was gewährleistet, dass die aus dem Vorverdampfungsraum 44 in den Verdampfungs-/Kondensatorraum 46 geführten gasförmigen Anteile des zugeführten Stoffgemischs über den gesamten Umfang des Kondensators 22 verteilt werden. Zudem werden die im Vorverdampfungsraum 44 enthaltenen flüssigen Anteile durch die bei der Rotation der Trennwand 42 wirkenden Zentrifugalkräfte zum ersten Durchlass 48 und somit an die innere Oberfläche des Gehäusemantels 10 geführt.

In ihrem Randbereich weist die Trennwand 42 eine nach unten in den Verdampfungs-/Kondensatorraum 46 vorstehende Aufhängung 30 auf. An dieser sind Verteilungsmittel angeordnet zur Verteilung des flüssigen Anteils des Stoffgemischs auf der inneren Oberfläche des Gehäusemantels 10 im Verdampfungs-/Kondensatorraum 46 und somit auf der Verdampfungsfläche 20. Die Verteilungsmittel sind gleich oder ähnlich zu den im Zusammenhang mit dem Stand der Technik in Fig. 1 gezeigten Verteilungsmitteln 32 ausgebildet. Die Aufhängung 30 mit den Verteilungsmitteln 32 ist dabei in radialer Richtung möglichst schlank ausgebildet, damit der Kondensator 22 möglichst nahe an die innere Oberfläche des Gehäusemantels 10 gebaut werden kann.

Alternativ zur gezeigten Ausführungsform ist auch denkbar, die Trennwand stationär auszubilden. Dabei ist auch denkbar, die Trennwand derart auszubilden, dass sie mit ihrem peripheren Rand an der inneren Oberfläche des Gehäusemantels anliegt oder mit dieser verbunden ist und der erste Durchlass in der Trennwand selber ausgebildet ist.

Der in Fig. 4 gezeigte Kondensationseinsatz 66 umfasst die den Kondensator 22 bildenden, in zwei konzentrischen Reihen angeordneten Kondensatorrohre 22', 22", die von der unteren Gehäusewand 8 getragen werden und an ihrem oberen Ende über den ringförmige Kühlmittelbehälter 25 miteinander verbunden sind. Der Kondensator weist die weiter oben bereits genannten fünf Kondensationszonen 22a, 22b, 22c, 22d, 22e auf, wobei am unteren Ende der oberen vier Kondensationszonen 22a, 22b, 22c, 22d jeweils die Sammelvorrichtung 56a, 56b, 56c bzw. 56d in Form einer ringförmigen Rinne angeordnet ist. Die Sammelvorrichtung der untersten Kondensationszone 22e wird von der unteren Gehäusewand 8 gebildet. Die Sammelvorrichtung 56b, 56c und 56d werden im gezeigten Kondensationseinsatz 66 von einem mit der unteren Gehäusewand 8 verbundenen Stützelement 57 gestützt. Das in den Fig. 2 und 3 gezeigte, zwischen der obersten Sammelvorrichtung 56a und dem Kühlmittelbehälter 25 angeordnete Stützelement 57a ist in Fig. 4 nicht gezeigt.

Wie aus Fig. 4 ersichtlich ist, führen von den obersten vier Sammelvorrichtungen 56a, 56b, 56c, 56d insgesamt sechs Kanäle 58a, 58b', 58b", 58c', 58c", 58d weg, wobei von der obersten Sammelvorrichtung 56a und von der viertobersten (=zweituntersten) Sammelvorrichtung 56d jeweils ein Kanal 58a bzw. 58d wegführt und von der zweitobersten Sammelvorrichtung 56b und von der drittobersten Sammelvorrichtung 56c jeweils zwei Kanäle 58b', 58b" bzw. 58c', 58c" wegführen. Die Kanäle 58a und 58d werden mit jeweils einer die untere Gehäusewand 8 durchstossenden Durchführung 62a, 62d zur separaten Ausführung des entsprechenden Kondensats der Kondensationszonen 22a und 22d aus dem Kurzwegverdampfer 2 verbunden. Die übrigen Kondensate der Kondensationszonen 22b, 22c werden mittels der Kanäle 58b', 58b", 58c', 58c" in einer an der unteren Gehäusewand 8 zentral angeordneten, gegenüber dem Verdampfungs-/Kondensatorraum 46 nicht abgedicheten Kammer 60 mit dem Kondensat der Kondensationszone 22e vereint und aus der Kammer 60 über den Sammelkanal 63 ausgeführt.

Je nach Länge der Kondensationszone und der Menge des in dieser anfallenden Kondensats kann die Zahl der Kanäle, die von der jeweiligen Sammelvorrichtung wegführen, variiert werden. Zudem kann mittels einfacher Umbauten die Wahl der separat auszuführenden Kondensate variiert werden. Selbstverständlich können auch alle Kondensate der verschiedenen Kondensationszone separat ausgeführt werden.

Die rinnenförmigen Sammelvorrichtungen 56a, 56b, 56c, 56d können in ihrer Höhe auf dem Kondensator 22 auch verstellbar ausgebildet sein, was es erlaubt, den Kurzwegverdampfer auf verschiedene Stoffgemische einzustellen. In einer solchen Ausführungsform sind die Kanäle in ihrer Länge entsprechend verstellbar, etwa als teleskopartige Röhren, oder flexibel ausgestaltet.

Weiter ist denkbar, dass der Kondensator mehr oder weniger Kondensationszonen (und entsprechend mehr oder weniger Sammelvorrichtungen) aufweist, als in den Figuren gezeigt sind.

Zur Auftrennung eines Stoffgemisches im erfindungsgemässen Kurzwegverdampfer wird dieses über die Materialzuführung 14 in den Vorverdampfungsraum 44 des Kurzwegverdampfers 2 eingebracht. Dabei findet in der Regel aufgrund der Druckabnahme eine Entspannungsverdampfung statt. Die dabei freigesetzten gasförmigen Anteile werden vom Vorverdampfungsraum 44 über den in der rotierenden Trennwand 42 angeordneten zweiten Durchlass 50 zum Kondensator 22 im Verdampfungs-/Kondensatorraum 46 geleitet und auf dem gesamten Umfang des Kondensators 22 gleichmässig verteilt.

Der im Vorverdampfungsraum 44 enthaltene flüssige Anteil wird durch die bei der Rotation der Trennwand 42 wirkenden Zentrifugalkräfte zu dem den ersten Durchlass 48 bildenden Spalt und somit an die innere Oberfläche des Gehäusemantels 10 geführt, wo er aufgrund der Gravitation nach unten fliesst. Dabei wird der flüssige Anteil mittels der an der rotierenden Trennwand 42 angebrachten Aufhängung 30 mit den daran angeordneten Verteilungsmitteln 32 auf der inneren Oberfläche des Gehäusemantels 10 im Verdampfungs-/Kondensatorraum 46 und somit auf der Verdampfungsfläche 20 gleichmässig verteilt.

Die an der Kondensatorfläche 23 anfallenden Kondensate der einzelnen Kondensationszonen 22a, 22b, 22c, 22d fliessen aufgrund des Gravitation nach unten und werden für jede Kondensationszone separat in den diesen zugeordneten Sammelvorrichtungen 56 gesammelt und über die entsprechenden Kanäle 58 weggeführt. Die weggeführten Kondensate werden separat oder miteinander vereint aus dem Kurzwegverdampfer ausgeführt.

Der Verdampfungsrückstand und der nicht kondensierte gasförmige Anteil des Stoffgemischs werden separat über die Ausgänge 38 bzw. 39 aus dem Kurzwegverdampfer ausgeführt.

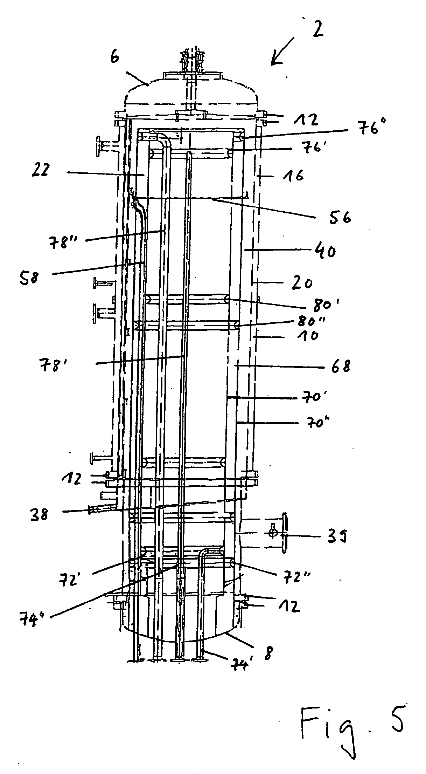

Als Alternative zu den in den Figuren 1 bis 4 gezeigten Kondensatorrohren 22', 22" sind auch sogenannte Kondensatorbleche 68 denkbar, wie sie beispielsweise in Fig. 5 gezeigt sind. Dabei handelt es sich um zwei zylinderförmige, konzentrisch angeordnete Lamellenbleche 70', 70" mit Strömungshohlräumen. Im seinem oberen und unteren Bereich weist das innere Lamellenblech 70' auf der der Längsachse zugewandten Seite umlaufend Öffnungen zu den Strömungshohlräumen auf.

Durch die im unteren Bereich angeordneten Öffnungen wird über einen als ringförmiges Halbrohr ausgestalteten unteren Verteilerring 72', in den seinerseits eine Kühlmittelzuleitung 74' mündet, Kühlmittel in die Strömungshohlräume geleitet. Das Kühlmittel strömt durch die Strömungshohlräume nach oben, wo es durch die im oberen Bereich angeordneten Öffnungen aus dem Lamellenblech 70' austritt und in einem oberen Sammelring 76' gesammelt wird, von dem ein Kühlmittelrückfluss 78' wegführt. Der Verteilerring 72' und der Sammelring 76' sind gleich ausgebildet.

In Analogie zum inneren Lamellenblech 70' sind auch im äusseren Lamellenblech 70" im unteren Bereich Öffnungen vorgesehen, durch die über einen weiteren mit einer Kühlmittelzuleitung 74" verbundenen unteren Verteilerring 72" Kühlmittel in die Strömungshohlräume eingeführt wird, welches schliesslich in einem weiteren oberen Sammelring 76" gesammelt und über einen weiteren Kühlmittelrückfluss 78" weggeführt wird.

Aus Gründen der Stabilität sind an den Lamellenblechen 70', 70" zudem ringförmige Stützelemente 80', 80" angeordnet.

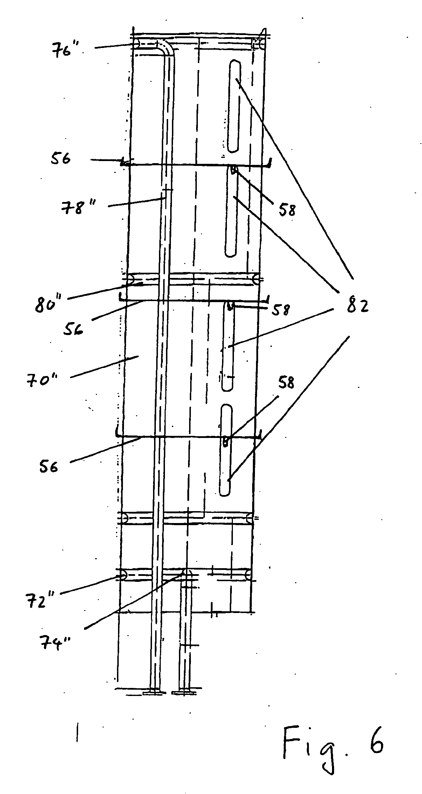

Wie aus Fig. 6 ersichtlich ist, weist das äussere Lamellenblech 70" in der Regel zudem spaltartige Durchlässe 82 auf. Dadurch wird gewährleistet, dass die gasförmige Komponente auch mit dem inneren Lamellenblech 70' in Kontakt kommt. In der in Fig. 6 gezeigten Ausführungsform werden zudem die von den Sammelvorrichtungen 56 wegführenden Kanäle 58 durch die Durchlässe 82 geführt.

## Patentansprüche

1. Kurzwegverdampfer umfassend ein einen Innenraum (40) umschliessendes Gehäuse (4) mit einer oberen Gehäusewand (6), einer unteren Gehäusewand (8) und einem mindestens teilweise beheizbaren Gehäusemantel (10), dessen innere Oberfläche oder ein Teil davon eine Verdampfungsfläche (20) bildet, eine in den Innenraum (40) mündende Materialzuführung (14), einen im Innenraum (40) angeordneten Kondensator (22) und eine zwischen der Materialzuführung (14) und dem Kondensator (22) angeordnete Trennwand (42), dem ein Durchlass zur Leitung von zugeführtem Material an die innere Oberfläche des Gehäusemantels (10) zwecks Verdampfung zugeordnet ist, **dadurch gekennzeichnet, dass** die Trennwand (42) den Innenraum (40) in einen Vorverdampfungsraum (94), in den die Materialzuführung (14) mündet, und einen den Kondensator (22) umfassenden Verdampfungs-/Kondensatorraum (46) trennt, der Durchlass (48) zur Leitung des im Vorverdampfungsraum (44) enthaltenen flüssigen Anteils an die innere Oberfläche des Gehäusemantels (10) im Verdampfungs-/Kondensatorraum (46) bestimmt ist und die Trennwand (42) einen weiteren Durchlass (50) zur Leitung des im Vorverdampfungsraum (44) enthaltenen gasförmigen Anteils zum Kondensator (22) aufweist.

2. Kurzwegverdampfer nach Anspruch 1, **dadurch gekennzeichnet, dass** die Trennwand (42) den Boden des Vorverdampfungsraums (44) bildet.

3. Kurzwegverdampfer nach Anspruch 1 oder 2, **dadurch gekennzeichnet, dass** der Durchmesser der Trennwand (42) geringer ist als der innere Durchmesser des Gehäusemantels (10), sodass zwischen der Trennwand (42) und der inneren Oberfläche des Gehäusemantels (10) ein Spalt ausgebildet ist, der den Durchlass (48) bildet.

4. Kurzwegverdampfer nach einem der Ansprüche 1 bis 3, **dadurch gekennzeichnet, dass** der weitere Durchlass (50) in der Verlängerung des Kondensators (22) angeordnet ist und einen Rohrstutzen (51) aufweist, der von der Trennwand (42) in den Vorverdampfungsraum (44) hinein vorsteht.

5. Kurzwegverdampfer nach einem der vorhergehenden Ansprüche, **dadurch gekennzeichnet, dass** der Gehäusemantel (10) ausschliesslich im Bereich des Verdampfungs-/Köndensatorraums (46) beheizt ist.

6. Kurzwegverdampfer nach einem der vorhergehenden Ansprüche, **dadurch gekennzeichnet, dass** die Trennwand (42) um die Längsachse des Gehäuses (4) drehbar ist und an ihrem radialen äusseren Randbereich eine in den Verdampfungs-/Kondensatorraum (46) vorstehende Aufhängung (30) mit daran angeordneten Verteilungsmitteln (32) zur Verteilung von Material auf der inneren Oberfläche des Gehäusemantels (10) im Verdampfungs-/Kondensatorraum (46) aufweist.

7. Kurwegverdampfer nach einem der vorhergehenden Ansprüche, **dadurch gekennzeichnet, dass** der Kondensator (22) übereinander angeordnete Kondensationszonen (22a, 22b, 22c, 22d) aufweist, an deren unterem Ende jeweils eine Sammelvorrichtung (56) zur Sammlung des Kondensats der jeweiligen Kondensationszone angeordnet ist und von jeder der Sammelvorrichtungen (56) ein Kanal (58) zur separaten Abführung des in der betreffenden Kondensationszone gesammelten Kondensats wegführt.

8. Kurwegverdampfer nach Anspruch 7, **dadurch gekennzeichnet, dass** mindestens eine der Sammelvorrichtungen (56) in Form einer Rinne ausgebildet ist.

9. Kurzwegverdampfer nach Anspruch 7 oder 8, **dadurch gekennzeichnet, dass** mindestens einer der Kanäle (58) als vorzugsweise schräg nach unten verlaufendes Rohr ausgebildet ist.

10. Kurzwegverdampfer nach einem der Ansprüche 7 bis 9, **dadurch gekennzeichnet, dass** mindestens zwei der Kanäle (58) in eine Kammer (60) münden, von der ein Sammelkanal (63) zur Abführung des darin gesammelten Kondensats aus dem Kurzwegverdampfer (2) wegführt.

11. Verfahren zur Auftrennung eines Stoffgemischs in einem Kurzwegverdampfer (2) nach einem der vorhergehenden Ansprüche, umfassend die Schritte, dass
a) das Stoffgemisch über die Materialzuführung (14) in den Vorverdampfungsraum (44) des Kurzwegverdampfers (2) eingeführt wird,
b) der flüssige Anteil des Stoffgemisches im Vorverdampfungsraum (44) durch den Durchlass (48) an die innere Oberfläche des Gehäusemantels (10) im Verdampfungs-/Kondensatorraum (46) zwecks Verdampfung geleitet wird und getrennt davon der gasförmige Anteil des Stoffgemischs im Vorverdampfungsraum (44) durch den weiteren Durchlass zum Kondensator (22) geleitet wird, und
c) der im Verdampfungs-/Kondensatorraum (46) kondensierte Anteil, der im Verdampfungs-/Kondensatorraum (46) nicht kondensierte gasförmige Anteil und der Verdampfungsrückstand des Stoffgemischs separat aus dem Kurzwegverdampfer (2) ausgeführt werden.

## Claims

1. Short path evaporator, comprising a housing (4) enclosing an inner space (40), the housing having an upper housing wall (6), with a lower housing wall (8) and with an at least partially heatable housing jacket (10), of which the inner surface or part thereof forms an evaporation surface (20), a material feed (14) leading into the inner space (40), a condenser (22) arranged in the inner space (40), and a partition (42) which is arranged between the material feed (14) and the condenser (22) and which is assigned a passage for conducting the fed material to the inner surface of the housing jacket (10) for the purpose of evaporation, **characterized in that** the partition (42) separates the inner space (40) into a pre-evaporation space (44), into which the material feed (14) issues, and an evaporation/condenser space (46) comprising the condenser (22), the passage (48) is intended for conducting the liquid fraction contained in the pre-evaporation space (44) to the inner surface of the housing jacket (10) in the evaporation/condenser space (46), and the partition (42) having a further passage (50) for conducting the gaseous fraction contained in the pre-evaporation space (44) to a condenser (22).

2. Short path evaporator according to Claim 1, **characterized in that** the partition (42) forms the bottom of the pre-evaporation space (44).

3. Short path evaporator according to Claim 1 or 2, **characterized in that** the diameter of the partition (42) is smaller than the inside diameter of the housing jacket (10), so that, between the partition (42) and the inner surface of the housing jacket (10), a gap is formed which forms the passage (48).

4. Short path evaporator according to one of Claims 1 to 3, **characterized in that** the further passage (50) is arranged in the prolongation of the condenser (22) and has a tubular connection piece (51) which projects from the partition (42) into the pre-evaporation space (44).

5. Short path evaporator according to one of the preceding claims, **characterized in that** the housing jacket (10) is heated solely in the region of the evaporation/condenser space (46).

6. Short path evaporator according to one of the preceding claims, **characterized in that** the partition (42) is rotatable about the longitudinal axis of the housing (4) and has on its radially outer marginal region a suspension (30) projecting into the evaporation/condenser space (46) and having distribution means (32) arranged thereon for distributing material on the inner surface of the housing jacket (10) in the evaporation/condenser space (46).

7. Short path evaporator according to one of the preceding claims, **characterized in that** the condenser (22) has condensation zones (22a, 22b, 22c, 22d) which are arranged one above the other and at the lower end of which a collecting device (56) for collecting the condensate of the respective condensation zone is arranged in each case, and a duct (58) for the separate discharge of the condensate collected in the respective condensation zone leads away from each of the collecting devices (56).

8. Short path evaporator according to Claim 7, **characterized in that** at least one of the collecting devices (56) is designed in the form of a gutter.

9. Short path evaporator according to Claim 7 or 8, **characterized in that** at least one of the ducts (58) is designed as a tube preferably running obliquely downwards.

10. Short path evaporator according to one of Claims 7 to 9, **characterized in that** at least two of the ducts (58) issue into a chamber (60), from which a collecting duct (63) for discharging the condensate collected therein out of the short path evaporator (2) leads away.

11. Method for separating a substance mixture in a short path evaporator (2) according to one of the preceding claims, comprising the steps that
a) the substance mixture is introduced via the material feed (14) into the pre-evaporation space (44) of the short path evaporator (2),
b) the liquid fraction of the substance mixture in the pre-evaporation space (44) is conducted through the passage (48) to the inner surface of the housing jacket (10) in the evaporation/condenser space (46) for the purpose of evaporation and, separately from this, the gaseous fraction of the substance mixture in the pre-evaporation space (44) is conducted through the further passage to the condenser (22), and
c) the fraction which is condensed in the evaporation/condenser space (46), the gaseous fraction not condensed in the evaporation/condenser space (46) and the evaporation residue of the substance mixture are discharged from the short path evaporator (2) separately.

## Revendications

1. Évaporateur à court trajet comprenant un boîtier (4) renfermant un espace intérieur (40) doté d'une paroi de boîtier supérieure (6), d'une paroi de boîtier inférieure (8) et d'une enveloppe de boîtier (10) au moins en partie chauffable dont la surface intérieure ou une partie de celle-ci forme une surface d'évaporation (20), une entrée de matière (14) débouchant dans l'espace intérieur (40), un condensateur (22) disposé dans l'espace intérieur (40) et une paroi de séparation (42) disposée entre l'entrée de matière (14) et le condensateur (22) à laquelle est associé un passage traversant en vue de conduire la matière introduite au niveau de la surface intérieure de l'enveloppe de boîtier (10) en vue de la vaporiser, **caractérisé en ce que** la paroi de séparation (42) sépare l'espace intérieur (40) en une chambre de prévaporisation (44) dans laquelle débouche l'entrée de matière (14) et une chambre de vaporisation/condensateur (46) renfermant le condensateur (22), que le passage traversant (48) est défini pour conduire la partie fluide contenue dans la chambre de prévaporisation (44) au niveau de la surface intérieure de l'enveloppe de boîtier (10) dans la chambre de vaporisation/condensateur (46) et que la paroi de séparation (42) comporte un autre passage traversant (50) permettant de conduire jusqu'au condensateur (22) la partie gazeuse contenue dans la chambre de prévaporisation (44).

2. Évaporateur à court trajet selon la revendication 1, **caractérisé en ce que** la paroi de séparation (42) forme le fond de la chambre de prévaporisation (44).

3. Évaporateur à court trajet selon la revendication 1 ou 2, **caractérisé en ce que** le diamètre de la paroi de séparation (42) est inférieur au diamètre intérieur de l'enveloppe de boîtier (10), de sorte qu'un interstice est formé entre la paroi de séparation (42) et la surface intérieure de l'enveloppe de boîtier (10), ledit interstice formant le passage traversant (48).

4. Évaporateur à court trajet selon l'une quelconque des revendications 1 à 3, **caractérisé en ce que** l'autre passage traversant (50) est disposé dans le prolongement du condensateur (22) et comporte une tubulure (51) qui saillit de la paroi de séparation (42) dans la chambre de prévaporisation (44).

5. Évaporateur à court trajet selon l'une quelconque des revendications précédentes, **caractérisé en ce que** l'enveloppe de boîtier (10) est exclusivement chauffée dans la zone de la chambre de vaporisation/condensateur (46).

6. Évaporateur à court trajet selon l'une quelconque des revendications précédentes, **caractérisé en ce que** la paroi de séparation (42) peut tourner autour de l'axe longitudinal du boîtier (4) et comporte au niveau de sa zone de bordure extérieure radiale une suspension (30) saillant dans la chambre de vaporisation/condensateur (46) avec des moyens de répartition (32) disposés dessus pour la répartition de la matière sur la surface intérieure de l'enveloppe de boîtier (10) dans la chambre de vaporisation/condensateur (46).

7. Évaporateur à court trajet selon l'une quelconque des revendications précédentes, **caractérisé en ce que** le condensateur (22) comporte des zones de condensation (22a, 22b, 22c, 22d) disposées les unes au-dessus des autres au niveau de l'extrémité inférieure desquelles un dispositif d'accumulation (56) est respectivement disposé pour l'accumulation du condensat de la zone de condensation respective et qu'un canal (58) ressort de chacun des dispositifs d'accumulation (56) pour évacuer séparément le condensat accumulé dans la zone de condensation respective.

8. Évaporateur à court trajet selon la revendication 7, **caractérisé en ce qu'**au moins un des dispositifs d'accumulation (56) prend la forme d'une rigole.

9. Évaporateur à court trajet selon la revendication 7 ou 8, **caractérisé en ce qu'**au moins un des canaux (58) prend de préférence la forme d'un tube s'étendant de façon inclinée vers le bas.

10. Évaporateur à court trajet selon l'une quelconque des revendications 7 à 9, **caractérisé en ce qu'**au moins deux des canaux (58) débouchent dans une chambre (60) d'où un canal d'accumulation (63) ressort pour évacuer le condensat accumulé à l'intérieur hors de l'évaporateur à court trajet (2).

11. Procédé de séparation d'un mélange de substances dans un évaporateur à court trajet (2) selon l'une quelconque des revendications précédentes, comprenant les étapes selon lesquelles :
a) le mélange de substances est introduit dans la chambre de prévaporisation (44) de l'évaporateur à court trajet (2) par le biais de l'entrée de matière (14) ;
b) la partie fluide du mélange de substances dans la chambre de prévaporisation (44) est amenée à travers le passage traversant (48) au niveau de la surface intérieure de l'enveloppe de boîtier (10) dans la chambre de vaporisation/condensateur (46) en vue de son évaporation et la partie gazeuse du mélange de substances dans la chambre de prévaporisation (44) est amenée séparément à travers l'autre passage traversant au condensateur (22) ;
c) la partie condensée dans la chambre de vaporisation/condensateur (46), la partie gazeuse non condensée dans la chambre de vaporisation/condensateur (46) et le résidu d'évaporation du mélange de substances sont évacués séparément hors de l'évaporateur à court trajet (2).
